# EUROPEAN PATENT APPLICATION

(11) **EP 4 026 684 A2**
(43) Date of publication of application: **13.07.2022**
(21) Application number: 21212799.7
(22) Date of filing: 07.12.2021
(51) Int. Cl.: B29C 65/18, B29C 65/30, B29C 65/78, B29C 65/24

(54) **HEAT SEALING APPARATUS**

(30) Priority: 15.12.2020 JP 2020207739
(71) Applicant: Pacraft Co., Ltd., Tokyo 108-0014 (JP)
(72) Inventor: Yoshikane, Tohru, Yamaguchi-ken (JP); Fukunaga, Kazuo, Yamaguchi-ken (JP)
(74) Representative: Grünecker Patent- und Rechtsanwälte PartG mbB

(57) **Abstract**

A heat sealing apparatus includes: a first sealing unit and a second sealing unit which are provided to be capable of being opened and closed and perform a heat sealing process of a bag while nipping the bag in a state where the first sealing unit and the second sealing unit are arranged in a closed position with the bag positioned between the first sealing unit and the second sealing unit; and a heat shield member including a heat reflector which is provided to cover at least a part of the first sealing unit and the second sealing unit arranged in the closed position, at a position away from the first sealing unit and the second sealing unit.

## Description

### TECHNICAL FIELD

The present disclosure relates to a heat sealing apparatus.

### BACKGROUND ART

Heat sealing apparatuses that each comprise a pair of heat plates for nipping a bag to seal the bag are widely used (see Japanese patent application publication No. 2008-150087).

### SUMMARY OF INVENTION

It is required for a heat sealing process of a bag to heat the bag under desired temperature conditions. If a bag is insufficiently heated, the bag will not be properly sealed, and if a bag is heated more than necessary, the bag will melt excessively. Further, if there is a large unevenness in heating within the sealed range of one bag, the bag might not be sealed properly, a desired sealing strength of the bag might not be ensured, and the appearance might be marred.

Further, in recent, various materials are being used for bags, and the temperature conditions for the heat sealing process may be severe depending on materials of bags. In such a case, it is required to control the heating temperature more strictly.

For example, the demand for bags made from monomaterials which can be easily recycled is increasing due to the growing awareness of environmental conservation. A monomaterial bag is made from a single material but may be made by combining multiple components (e.g., film members) that have been subjected to various processing to have different properties (e.g., an oxygen permeability property and a light shielding property) from each other.

In monomaterial bags that are to be subjected to a heat sealing process, a component that melts by the heat sealing process and a component that does not melt by the heat sealing process are used in combination. However, the difference in melting temperature between such components of monomaterials tends to be smaller than that of bags made from multiple components of different materials from each other. Therefore, the heat sealing process for monomaterial bags tends to be required to be performed under more severe temperature conditions.

The present disclosure has been contrived in view of the circumstances described above, and it is an object of the present disclosure to provide techniques that are advantageous in performing a heat sealing process of a bag under desired temperature conditions.

An aspect of the present disclosure is directed to a heat sealing apparatus comprising: a first sealing unit and a second sealing unit which are provided to be capable of being opened and closed and perform a heat sealing process of a bag while nipping the bag in a state where the first sealing unit and the second sealing unit are arranged in a closed position with the bag positioned between the first sealing unit and the second sealing unit; and a heat shield member including a heat reflector which is provided to cover at least a part of the first sealing unit and the second sealing unit arranged in the closed position, at a position away from the first sealing unit and the second sealing unit.

The heat shield member may include a heat insulating layer.

Another aspect of the present disclosure is directed to a heat sealing apparatus comprising a first sealing unit and a second sealing unit which are provided to be capable of being opened and closed and perform a heat sealing process of a bag while nipping the bag in a state where the first sealing unit and the second sealing unit are arranged in a closed position with the bag positioned between the first sealing unit and the second sealing unit, wherein at least one of the first sealing unit and the second sealing unit includes a heating element and a heat insulating layer.

Each of the first sealing unit and the second sealing unit may have a sealing contact surface portion, and the first sealing unit and the second sealing unit may nip the bag while the sealing contact surface portion is brought into contact with the bag in a state where the first sealing unit and the second sealing unit are arranged in a closed position with a bag positioned between the first sealing unit and the second sealing unit, and the heat insulating layer may not be positioned between the heating element and the sealing contact surface portion.

The heat insulating layer may be positioned away from the heating element.

The heat insulating layer may be positioned adjacent to the heating element.

At least one of the first sealing unit and the second sealing unit may include a sealing body portion which has a first hole and a second hole connected to the first hole, the heating element may be located in the first hole and be supported by parts of a hole compartment surface of the sealing body portion which face each other via the heating element, the hole compartment surface compartmentalizing the first hole, and the second hole may not be located between the heating element and the sealing contact surface portion and form the heat insulating layer.

Another aspect of the present disclosure is directed to a heat sealing apparatus comprising a first sealing unit and a second sealing unit which are provided to be capable of being opened and closed, have sealing contact surface portions respectively, and nip a bag to perform a heat sealing process while the sealing contact surface portions are brought into contact with the bag in a state where the first sealing unit and the second sealing unit are arranged in a closed position with the bag positioned between the first sealing unit and the second sealing unit, wherein at least one of the first sealing unit and the second sealing unit includes: a temperature acquisition device that acquires temperature of the sealing contact surface portion; a first heating element; and a second heating element that generates heat according to the temperature of the sealing contact surface portion acquired by the temperature acquisition device.

The second heating element may be positioned closer to the sealing contact surface portion than the first heating element.

The sealing contact surface portion of each of the first sealing unit and the second sealing unit may extend in a sealing surface extension direction, a plurality of second heating elements may be provided, and the plurality of second heating elements may be discretely positioned in the sealing surface extension direction.

The first sealing unit and the second sealing unit may bond a plurality of film members included in the bag to each other by the heat sealing process.

The first sealing unit and the second sealing unit may bond a plurality of film members included in the bag to an attachment tool by the heat sealing process.

According to the present disclosure, it is advantageous in performing a heat sealing process of a bag under desired temperature conditions.

### BRIEF DESCRIPTION OF DRAWINGS

Fig. 1 is a side view of an example of a bag sealing apparatus (a heat sealing apparatus), showing a first sealing unit and a second sealing unit in an open position.
Fig. 2 is a top view showing the first sealing unit and the second sealing unit in an enlarged manner, illustrating a situation where a bag is positioned between the first sealing unit and the second sealing unit.
Fig. 3 is a diagram in which the first sealing unit and a bag are viewed from a side, showing an example of the positional relation of the first sealing unit (in particular, a sealing surface) with respect to a bag arranged in a seal processing position.
Fig. 4 is an enlarged side view showing an example of a bag sealing apparatus according to a first embodiment.
Fig. 5 is an enlarged view of a part indicated by a reference sign of "V" in Fig. 4.
Fig. 6 is an enlarged side view showing an example of a bag sealing apparatus according to a second embodiment.
Fig. 7 is an enlarged side view showing an example of a bag sealing apparatus according to a third embodiment.
Fig. 8 is an enlarged side view showing an example of a bag sealing apparatus according to a fourth embodiment.
Fig. 9 is a diagram in which a first sealing unit according to the fourth embodiment and a bag are viewed from a side, showing an example of positional relation of the first sealing unit (in particular, a first heating element and second heating elements) with respect to a bag arranged in a seal processing position.
Fig. 10 is a block diagram showing an example of a control configuration of the bag sealing apparatus of the fourth embodiment.
Fig. 11 is a top view schematically showing an example of a package processing apparatus.
Fig. 12 is a top view showing an example of a spout attachment apparatus.
Fig. 13 is a side view showing an example of a bag with a spout attached.

### DESCRIPTION OF EMBODIMENTS

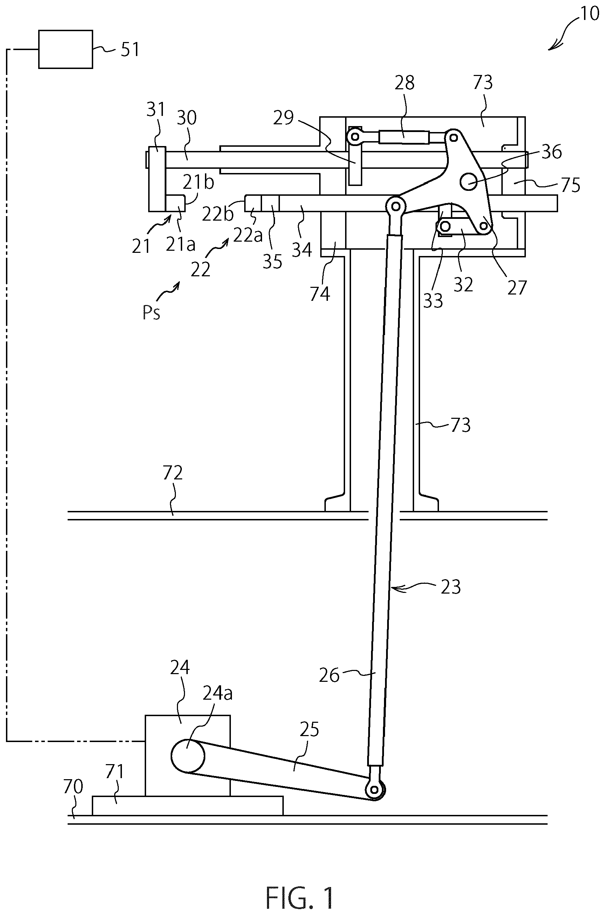

Fig. 1 is a side view of an example of a bag sealing apparatus (a heat sealing apparatus) 10, showing a first sealing unit 21 and a second sealing unit 22 placed in an open position. In Fig. 1, for ease of understanding, a second mount 72, a stand 73, a first slide support block 74 and a second slide support block 75 are shown in cross-section, and the inner states of the stand 73, the first slide support block 74 and the second slide support block 75 are illustrated.

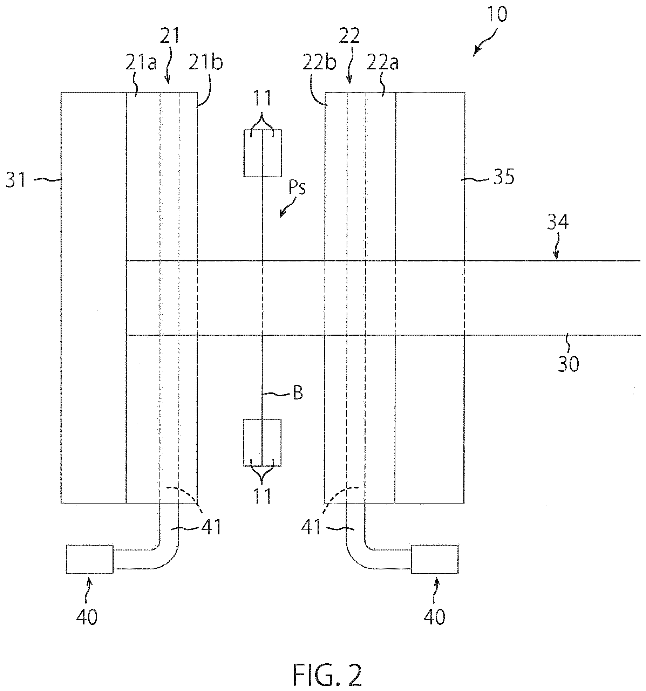

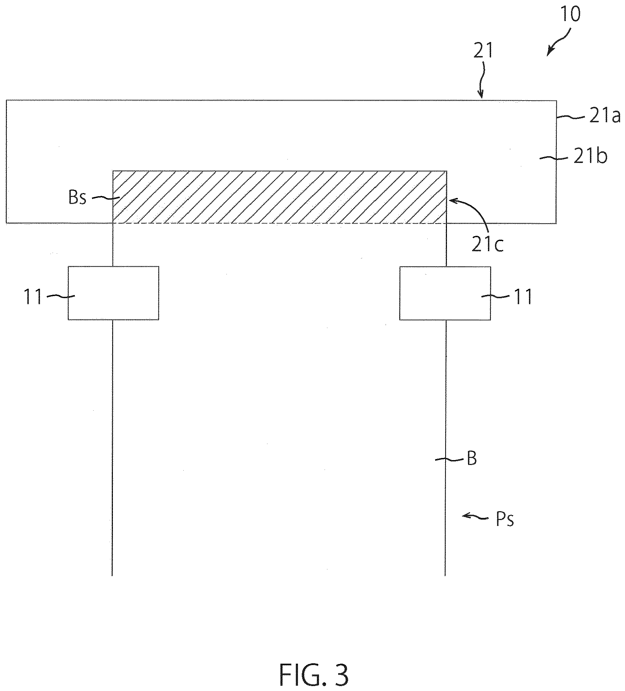

Fig. 2 is a top view showing the first sealing unit 21 and the second sealing unit 22 in an enlarged view, illustrating a bag B being placed between the first sealing unit 21 and the second sealing unit 22. Fig. 3 is a diagram of the first sealing unit 21 and a bag B viewed from the side, showing an example of the positional relation of the first sealing unit 21 (in particular, the sealing surface) with respect to the bag B positioned at a seal processing position Ps. In Fig. 3, the second sealing unit 22 located on the near side is not shown.

The bag sealing apparatus 10 shown in Figs. 1 to 3 comprises: a seal driving device 23 that opens and closes the first sealing unit 21 and the second sealing unit 22; and a support driving device (not shown in Figs. 1 to 3) that moves a bag support unit 11 that supports a bag B. The bag support unit 11 has the form of a gripper, or the like, that grasps both side portions of a bag B.

The support driving device comprises a first driving source (not shown in Figs. 1 to 3) and intermittently moves a bag support unit 11 to arrange a bag B at the seal processing position Ps. The specific configuration of the support driving device is not limited. For example, a motor, not shown in the drawings, may constitute the first driving source, and the support driving device may have this motor and a rotary table attached to the rotation shaft of the motor. In this case, the rotary table can be rotated according to the rotation of the rotation shaft to move one or more bag support units 11 attached to the periphery of the rotary table in a circumferential direction.

The seal driving device 23 includes a second driving source 24, such as a servomotor, which is provided separately from the first driving source. In the present example, the second driving source 24 is fixed onto a foundation 71 on a first mount 70 as shown in Fig. 1. One end portion of a first swing lever 25 is fixedly attached to the rotation shaft 24a of the second driving source 24. The first swing lever 25 swings around the rotation shaft 24a in response to the rotation of the rotation shaft 24a. One end portion of a connecting shaft 26 is rotatably attached to the other end portion of the first swing lever 25 in a freely rotatable manner. The second swing lever 27 is rotatably attached to the other end portion of the connecting shaft 26 in a freely rotatable manner. The connecting shaft 26 extends in the height direction (i.e., along the vertical direction where gravity acts) through the inside of the stand 73 fixed on the second mount 72.

A support shaft 36 is rotatably attached to the second swing lever 27 in a freely rotatable manner, and one end portion of a first advancing-retreating shaft 28 and one end portion of a second advancing-retreating shaft 32 are rotatably attached to the second swing lever 27 in a freely rotatable manner. The second swing lever 27 is provided so as to be able to rotate around the support shaft 36 in a freely rotatable manner. Both ends of the support shaft 36 are fixed to support bodies (omitted in the drawings) attached to the stand 73, so that the support shaft 36 is fixedly supported by the stand 73 via the support bodies.

The other end portion of the first advancing-retreating shaft 28 is rotatably attached to a first moving block 29 in a freely rotatable manner, and the first moving block 29 is fixed to a first drive shaft 30. The other end portion of the second advancing-retreating shaft 32 is rotatably attached to a second moving block 33 in a freely rotatable manner, and the second moving block 33 is fixed to a second drive shaft 34.

The first slide support block 74 and the second slide support block 75 are fixedly attached to the hollow stand 73. The first slide support block 74 and the second slide support block 75 are located horizontally away from each other and guide the first drive shaft 30 and the second drive shaft 34 horizontally while supporting the first drive shaft 30 and the second drive shaft 34 in such a manner that the first drive shaft 30 and the second drive shaft 34 can freely slide.

The first sealing unit 21 is attached to one end portion of the first drive shaft 30 via a first relay block 31. The second sealing unit 22 is attached to one end portion of the second drive shaft 34 via a second relay block 35. The first sealing unit 21 and the second sealing unit 22 horizontally face each other and are driven by the seal driving device 23 described above to perform opening and closing motions (in the present embodiment, horizontal movement motions), so as to move closer to each other or to move away from each other.

For example, by rotating the rotation shaft 24a in a counterclockwise direction in Fig. 1 in a state where the first sealing unit 21 and the second sealing unit 22 are placed in an open position, the first swing lever 25 is caused to swing upward. This causes the connecting shaft 26 to move upward, the second swing lever 27 to rotate in a clockwise direction around the support shaft 36, and the first and second advancing-retreating shafts 28 and 32 to move in directions opposite from each other (i.e., opposite directions) of the horizontal direction. Specifically, the first advancing-retreating shaft 28 moves in a right direction in Fig. 1 while the second advancing-retreating shaft 32 moves in a left direction in Fig. 1.

As a result, the first sealing unit 21, which is attached to the first advancing-retreating shaft 28 via the first moving block 29, the first drive shaft 30 and the first relay block 31, moves in the same direction as the first advancing-retreating shaft 28 (i.e., in a right direction in Fig. 1).

The second sealing unit 22, which is attached to the second advancing-retreating shaft 32 via the second moving block 33, the second drive shaft 34 and the second relay block 35, moves in the same direction as the second advancing-retreating shaft 32 (i.e., in a left direction in Fig. 1).

As a result, the first sealing unit 21 and the second sealing unit 22 are placed in a closed position.

By placing a bag B at the seal processing position Ps in a state where the first sealing unit 21 and the second sealing unit 22 are placed in an open position, said bag B is placed between the first sealing unit 21 (in particular, a sealing surface 21b) and the second sealing unit 22 (in particular, a sealing surface 22b). When the first sealing unit 21 and the second sealing unit 22 are moved from the open position and are placed in the closed position in a state where the bag B is placed at the seal processing position Ps, the sealing surface 21b of the first sealing unit 21 and the sealing surface 22b of the second sealing unit 22 nip the bag B while contacting the bag B to pressurize the bag B from both sides. The first sealing unit 21 and the second sealing unit 22 heat the bag B positioned at the seal processing position Ps while sandwiching the bag B in this manner, thereby performing the heat sealing process.

Each of the first sealing unit 21 and the second sealing unit 22 includes a heater device 40, as shown in Fig. 2. The heater devices 40 are not limited but typically each include a heater (e.g., a cartridge heater) that generates heat when energized. In the present example, in each of a sealing body portion 21a of the first sealing unit 21 and a sealing body portion 22a of the second sealing unit 22, a heating element 41 of a corresponding heater device 40 is provided to penetrate.

The heat emitted from the respective heating elements 41 is transferred to the sealing body portions 21a, 22a of the first sealing unit 21 and the second sealing unit 22, so that the sealing surfaces 21b and 22b of the first sealing unit 21 and the second sealing unit 22 are heated.

A bag B is pressed by the heated sealing surfaces 21b and 22b of the first sealing unit 21 and the second sealing unit 22 in this manner, so that the bag B is heated and pressed to be sealed.

The specific part of a bag B that is heat-sealed is not limited. In the present example, the upper end portion (i.e., the mouth portion) of a bag B is the seal region Bs as shown in Fig. 3.

In the heat sealing process carried out in this manner, part or whole of the sealing surfaces 21b and 22b of the first sealing unit 21 and the second sealing unit 22 contact a bag B as sealing contact surface portions 21c. The extent of the sealing contact surface portions 21c may vary depending on the type and size of a bag B. In general, the range of the sealing contact surface portions 21c in the width direction (in the left-right direction in Fig. 3) tends to change depending on the type of bags B; however, the range of the sealing contact surface portions 21c in the height direction (in the up-down direction in Fig. 3) is often constant, regardless of the type or size of bags B.

Since the respective sealing contact surface portions of the first sealing unit 21 and the second sealing unit 22 are in contact with a bag B and directly transfer heat to the bag B, the temperature of the sealing contact surface portions is likely to drop during the heat sealing process. If the temperature of the sealing contact surface portions drops to a temperature unsuitable for the heat sealing process during the heat sealing process, a bag B might suffer from defects such as sealing failure.

From a viewpoint of preventing such defects from being brought to a bag B, it is desirable to suppress temperature drop of the sealing contact surface portions during the heat sealing process and to efficiently perform heating of the sealing contact surface portions by the heater devices 40.

Below, typical embodiments of the bag sealing apparatus (a heat sealing apparatus) 10 and the heat sealing method which are effective in preventing failures such as sealing defects which may be brought to a bag B, are described by way of example.

### [First embodiment]

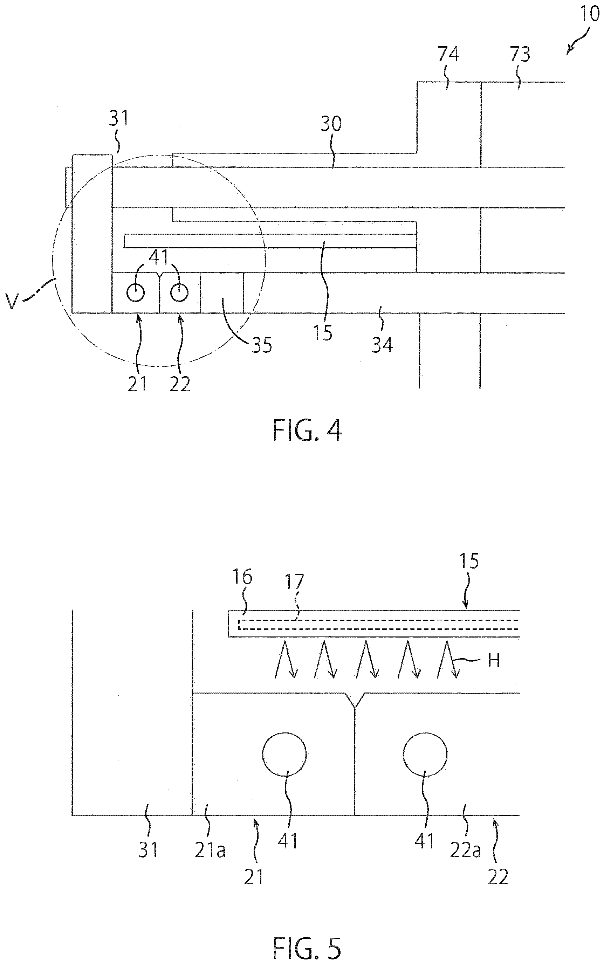

Fig. 4 is an enlarged side view showing an example of a bag sealing apparatus 10 according to a first embodiment. Fig. 5 is an enlarged view of the area indicated by the reference sign "V" in Fig. 4. In Figs. 4 and 5, a bag B is not shown.

The first sealing unit 21 and the second sealing unit 22, which are provided to be able to open and close in a relative manner as described above, are placed in the closed position in a state where a bag B is positioned therebetween, to perform the heat sealing process while nipping the bag B.

In the present embodiment, the heat radiated from the first sealing unit 21 and the second sealing unit 22 is prevented from escaping to the outside by a heat shield member 15, thereby suppressing the temperature drop and efficient heating of the first sealing unit 21 and the second sealing unit 22 (in particular, the sealing contact surface portions)are performed.

The heat shield member 15 includes a heat reflector 16.

The heat reflector 16 is a member capable of efficiently reflecting heat rays H, including, for example, infrared rays (e.g., far infrared rays), and may be composed of a single composition or may include a plurality of compositions. For example, the heat reflector 16 preferably exhibit, with respect to far infrared rays, a reflectance of 30% or more, more preferably a reflectance of 50% or more, more preferably a reflectance of 90% or more, and more preferably a reflectance of 95% or more. The reflectance here is the ratio of the reflected energy to the thermal radiation energy that reaches the heat reflector 16. Typically, the heat reflector 16 may be composed of aluminum, gold or silver but the specific composition of the heat reflector 16 is not limited.

The heat reflector 16 is provided at a position away from the first sealing unit 21 and the second sealing unit 22 to cover at least a part of the first sealing unit 21 and the second sealing unit 22 (e.g., the sealing surface 21b and the sealing surface 22b of the first sealing unit 21 and the second sealing unit 22) placed in the closed position.

The position of the heat shield member 15 relative to the first sealing unit 21 and the second sealing unit 22 is not limited. The heat shield member 15 shown in Figs. 4 and 5 is provided above the first sealing unit 21 and the second sealing unit 22. Warmed air tends to move upward. By providing the heat shield member 15 above the first sealing unit 21 and the second sealing unit 22 to cover the first sealing unit 21 and the second sealing unit 22, the heat (e.g., far infrared rays) radiated from the first sealing unit 21 and the second sealing unit 22 can be efficiently reflected toward the first sealing unit 21 and the second sealing unit 22.

The heat thus returned to the first sealing unit 21 and the second sealing unit 22 can be utilized to assist in heating the sealing surfaces 21b, 22b (in particular, the sealing contact surface portions) of the first sealing unit 21 and the second sealing unit 22 and to suppress the temperature drop of said sealing surfaces 21b, 22b (in particular, the sealing contact surface portions).

The heat shield member 15 in the present example further includes a heat insulating layer 17. The heat insulating layer 17 shown in Fig. 5 is provided to be surrounded by the heat reflector 16. The surface that is exposed to the outside is composed of the heat reflector 16, and the heat insulating layer 17 is provided to cover at least a part of the first sealing unit 21 and the second sealing unit 22 (e.g., the sealing surface 21b and the sealing surface 22b of the first sealing unit 21 and the second sealing unit 22 arranged in the closed position) in a state where the heat insulating layer 17 is not exposed to the outside while being inside of the heat reflector 16.

The heat insulating layer 17 reduces thermal migration and heat transfer in the heat shield member 15. The heat insulating layer 17 in the present example has a smaller thermal conductivity than the heat reflector 16. For example, the heat insulating layer 17 exhibits preferably a thermal conductivity less than 0.1 W/m·K, more preferably a thermal conductivity less than 0.06 W/m·K, more preferably a thermal conductivity less than 0.05 W/m·K, more preferably a thermal conductivity less than 0.04 W/m·K, and more preferably a thermal conductivity less than 0.03 W/m·K. Typically, the heat insulating layer 17 can be composed of a fiber-based insulation material, a foam-based insulation material, a gas layer or a vacuum layer, but the specific composition of the heat insulating layer 17 is not limited.

For example, the fact that the heat shield member 15 includes the heat insulating layer 17 makes the heat shield member 15 less susceptible to the influence of temperature from the external environment, and reduces, in the heat shield member 15, the loss of the heat emitted from the first sealing unit 21 and the second sealing unit 22. As a result, heating of the sealing surfaces 21b, 22b (in particular, the sealing contact surface portions) of the first sealing unit 21 and the second sealing unit 22 can be promoted, and the temperature drop of the sealing surfaces 21b, 22b (in particular, the sealing contact surface portions) can be suppressed.

### [Second embodiment]

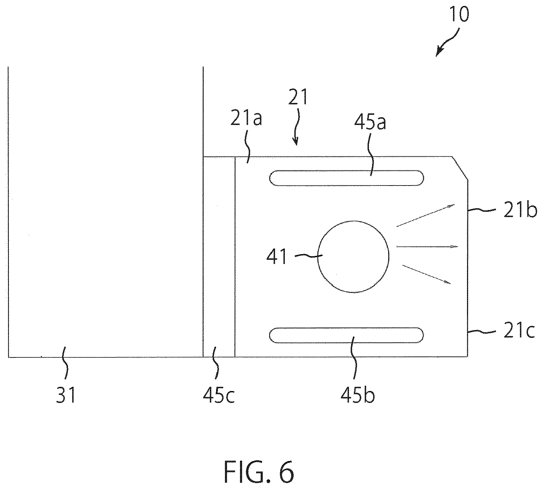

Fig. 6 is an enlarged side view showing an example of a bag sealing apparatus 10 according to a second embodiment.

In the bag sealing apparatus 10 of the present embodiment, elements identical or corresponding to those of the first embodiment described above are indicated with the same reference signs, and detailed description thereof is omitted.

In the following, the first sealing unit 21 will be mainly described. The second sealing unit 22 may have the same configuration as the first sealing unit 21 or may have a configuration different from the first sealing unit 21.

The first sealing unit 21 of the present embodiment includes a heating element 41 and heat insulating layers 45a, 45b, 45c, and the heat insulating layers 45a, 45b, 45c are located away from the heating element 41. In the example shown in Fig. 6, the first heat insulating layer 45a is provided above the heating element 41, the second heat insulating layer 45b is provided below the heating element 41, and the third heat insulating layer 45c is provided between the first relay block 31 and the sealing body portion 21a (i.e., on the opposite side from the sealing surface 21b via the heating element 41).

These heat insulating layers 45a, 45b, 45c are provided in such a manner that the heat insulating layers 45a, 45b, 45c are not located between the heating element 41 and the sealing surface 21b (in particular, the sealing contact surface portion 21c).

The heat insulating layers 45a, 45b, 45c may have the same configuration as the heat insulating layer 17 (see Fig. 5) which the first sealing unit 21 of the first embodiment described above. The first heat insulating layer 45a and the second heat insulating layer 45b, which are provided inside the sealing body portion 21a, can be configured as a tangible layer (e.g., a fiber-based insulation material or a foam-based fiber-based insulation material) and/or an intangible layer (e.g., a gas layer or a vacuum layer).

On the other hand, the third heat insulating layer 45c, which works to fix the sealing body portion 21a to the first relay block 31, is difficult to be configured as an intangible layer and is configured as a tangible layer. The third heat insulating layer 45c may partially contain an intangible layer, and an intangible layer may be provided inside a tangible member forming the third heat insulating layer 45c.

According to the bag sealing apparatus 10 of the present embodiment, due to the heat insulating layers 45a, 45b, 45c, the release of heat from the surfaces of the first sealing unit 21 other than the sealing surface 21b can be reduced, and the heat from the heating element 41 can be effectively transferred to the sealing surface 21b (in particular, the sealing contact surface portion 21c). In particular, since no heat insulating layer is provided between the heating element 41 and the sealing surface 21b (in particular, the sealing contact surface portion 21c), the conduction of heat from the heating element 41 to the sealing surface 21b (in particular, the sealing contact surface portion 21c) is not inhibited by a heat insulating layer.

### [Third Embodiment]

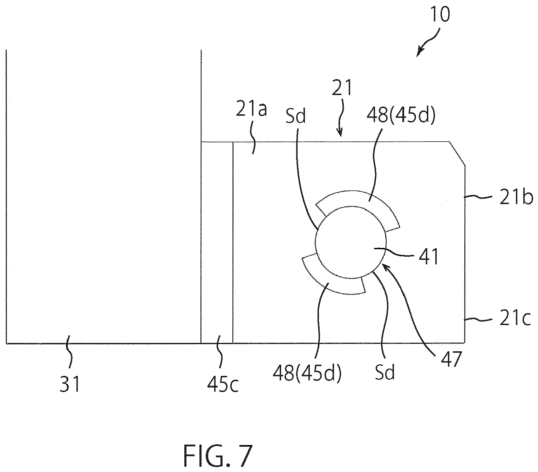

Fig. 7 is an enlarged side view showing an example of a bag sealing apparatus 10 according to a third embodiment.

In the bag sealing apparatus 10 of the present embodiment, elements identical or corresponding to those of the second embodiment described above are indicated with the same reference signs, and detailed description thereof is omitted.

In the following, the first sealing unit 21 will be mainly described. The second sealing unit 22 may have the same configuration as the first sealing unit 21 or may have a configuration different from the first sealing unit 21.

The first sealing unit 21 of the present embodiment includes: a third heat insulating layer 45c provided between the first relay block 31 and the sealing body portion 21a; and two fourth heat insulating layers 45d located adjacent to the heating element 41.

The sealing body portion 21a of the first sealing unit 21 shown in Fig. 7 has a first hole 47 and two second holes 48 connected to the first hole 47.

The heating element 41 is placed in the first hole 47. The parts of the hole compartment surface Sd of the sealing body portion 21a which compartmentalize the first hole 47 and which mutually face each other via the heating element 41, contact the heating element 41 and support the heating element 41 in a state where the heating element 41 is sandwiched between the parts of the hole compartment surface Sd. The diameter of the circular cross-section of the heating element 41 has approximately the same size as the diameter of the circular cross-section of the first hole 47, and the heating element 41 is brought into close contact with the hole compartment surface Sd without any gap.

Each second hole 48 is adjacent to the heating element 41 but is not located between the heating element 41 and the sealing contact surface portion 21c. Each second hole 48, which is formed as a space inside the sealing body portion 21a, constitutes a heat insulating layer (i.e., a fourth heat insulating layer 45d). A tangible heat insulating member may be placed in each second hole 48.

According to the bag sealing apparatus 10 of the present embodiment, due to the heat insulating layers 45c and 45d, the release of heat from the surfaces of the first sealing unit 21 other than the sealing surface 21b (in particular, the sealing contact surface portion 21c) can be reduced, and the heat from the heating element 41 can be effectively transferred to the sealing contact surface portion 21c. In particular, since no heat insulating layer is provided between the heating element 41 and the sealing contact surface portion 21c, conduction of heat from the heating element 41 to the sealing contact surface portion 21c is not inhibited by a heat insulating layer.

### [Fourth Embodiment]

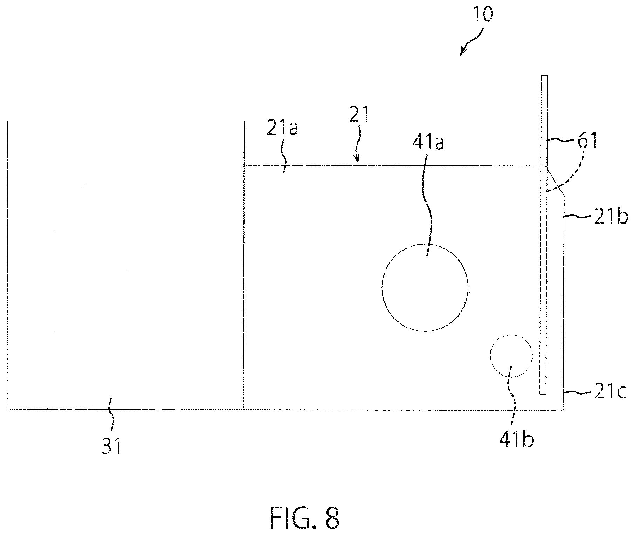

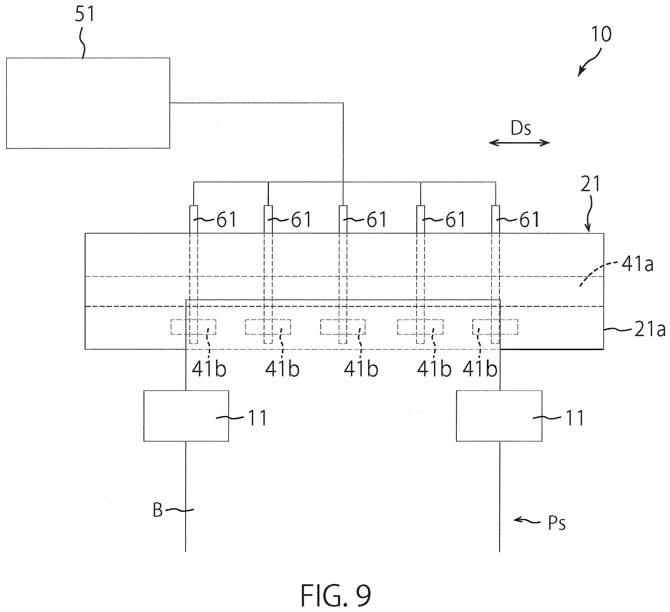

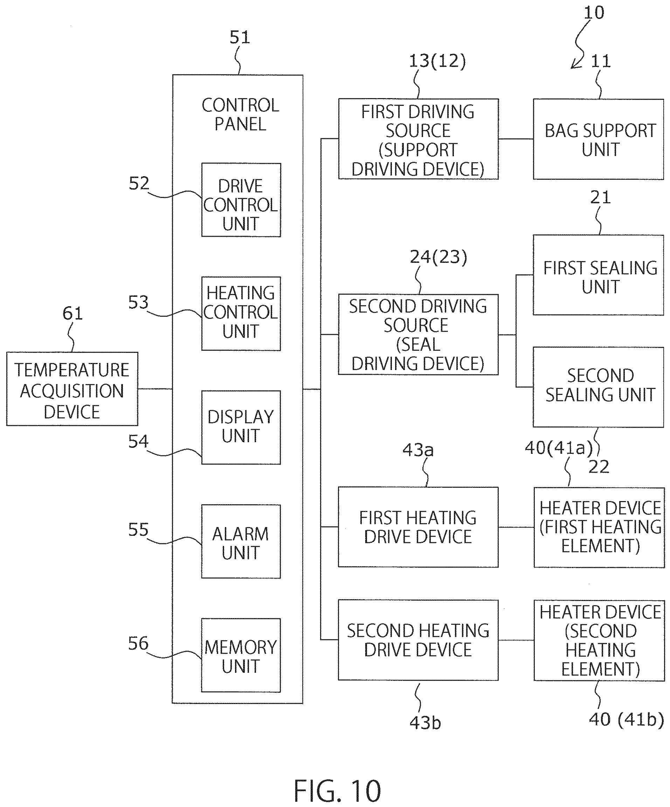

Fig. 8 is an enlarged side view showing an example of a bag sealing apparatus 10 of a fourth embodiment. Fig. 9 is a diagram in which a bag B and a first sealing unit 21 according to the fourth embodiment are viewed from the side, showing an example of a positional relation of the first sealing unit 21 (in particular, a first heating element 41a and second heating elements 41b) with respect to the bag B positioned at the seal processing position Ps. In Fig. 9, the second sealing unit 22 located on the near side is not shown. Fig. 10 is a block diagram showing an example of a control configuration of the bag sealing apparatus 10 according to the fourth embodiment.

In the bag sealing apparatus 10 of the present embodiment, elements identical or corresponding to those of the first to third embodiments described above are indicated with the same reference signs, and detailed description thereof is omitted.

In the following, the first sealing unit 21 will be mainly described. The second sealing unit 22 may have the same configuration as the first sealing unit 21 or may have a configuration different from the first sealing unit 21.

The first sealing unit 21 of the present embodiment includes: a plurality of temperature acquisition devices 61 that acquire the temperature of the sealing contact surface portion 21c; a first heating element 41a (i.e., a main heater); and a plurality of second heating elements 41b (i.e., auxiliary heaters) that generate heat according to the temperature of the sealing contact surface portion 21c acquired by the temperature acquisition devices 61.

The first heating element 41a has an integral structure extending in the sealing surface extension direction Ds (i.e., a width direction) and penetrates the sealing body portion 21a of the first sealing unit 21. The sealing surface extension direction Ds is a direction in which the sealing surface 21b (including the sealing contact surface portion 21c) extends, and usually coincides with the width direction of a bag B positioned at the seal processing position Ps. The first heating element 41a has a length, in the sealing surface extension direction Ds, that is greater than or equal to the size of the seal region Bs of a bag B (in the present example, the maximum width of a bag B).

A plurality of second heating elements 41b are positioned discretely in the sealing surface extension direction Ds, and each second heating element 41b is disposed closer to the sealing contact surface portion 21c than the first heating element 41a. Therefore, the distance between each second heating element 41b and the sealing contact surface portion 21c is shorter than the distance between the first heating element 41a and the sealing contact surface portion 21c.

The height direction range of each second heating element 41b shown in Figs. 8 and 9 is included in the height direction range of the sealing contact surface portion 21c, and each second heating element 41b is located away from the sealing contact surface portion 21c in the horizontal direction (in the present example, in a direction perpendicular to the sealing surface 21b).

Each temperature acquisition device 61 is a device that directly or indirectly acquires the temperature of the sealing contact surface portion 21c. The measurement section of each temperature acquisition device 61 of the present example is embedded in the sealing body portion 21a and directly acquires the temperature of the sealing body portion 21a while contacting the sealing body portion 21a, and therefore can be configured, for example, by a thermocouple. The measurement method and arrangement of each temperature acquisition device 61 are not limited, and each temperature acquisition device 61 may be configured, for example, by a non-contact type temperature measurement device provided at a position away from the sealing body portion 21a.

The results of the acquisition of the temperature of the sealing contact surface portion 21c by each temperature acquisition device 61 are transmitted to a control panel 51 (e.g., a heating control unit 53).

In the present example, a plurality of temperature acquisition devices 61 are provided to correspond to a plurality of second heating elements 41b. The second heating elements 41b and the temperature acquisition devices 61 correspond to each other on a one-to-one basis, and each temperature acquisition device 61 measures the temperature of a portion of the sealing contact surface portion 21c that can be heated by a corresponding second heating element 41b. Specifically, each temperature acquisition device 61 measures the temperature of a portion of the sealing body portion 21a in the vicinity of a corresponding second heating element 41b (in the example shown in Figs. 8 and 9, between the corresponding second heating element 41b and the sealing surface 21b).

As described above, in the present example, the number of second heating elements 41b and the number of temperature acquisition devices 61 are the same as each other. However, the number of the second heating elements 41b and the number of the temperature acquisition devices 61 may be different from each other, and the second heating elements 41b and the temperature acquisition devices 61 may correspond in a "plurality to one" or "one to plurality" manner.

The direct measurement object for each temperature acquisition device 61 shown in Figs. 8 and 9 is the temperature of a portion of the sealing body portion 21a between a corresponding second heating element 41b and the sealing contact surface portion 21c. If the section to be directly measured by each temperature acquisition device 61 and the section to be measured of the sealing contact surface portion 21c are in close proximity to each other and have approximately the same temperature, the temperature measured by each temperature acquisition device 61 may be regarded as the temperature of the section to be measured of the sealing contact surface portion 21c.

On the other hand, if there is a non-negligible temperature difference between the section to be directly measured by each temperature acquisition device 61 and the section to be measured of the sealing contact surface portion 21c, the temperature derived by reflecting the estimated temperature difference in the temperature measured by each temperature acquisition device 61 may be regarded as the temperature of the section to be measured of the sealing contact surface portion 21c. Such reflection of the temperature difference may be performed by each temperature acquisition device 61 or may be performed by the control panel 51 (e.g., the heating control unit 53).

In the example shown in Fig. 10, the control panel 51 includes a drive control unit 52 and the heating control unit 53.

The drive control unit 52 controls the drive of components of the bag sealing apparatus 10. For example, by driving the first driving source 13 under the control of the drive control unit 52, the moving speed and the moving position of a bag support unit 11 and a bag B can be adjusted. Also, by driving the second driving source 24 under the control of the drive control unit 52, the relative opening-closing speed and the relative opening-closing position of the first sealing unit 21 and the second sealing unit 22 can be adjusted.

The drive control unit 52 may control elements other than the first driving source 13 (e.g., a power transmission adjustment device (not shown in the drawings)) included in the support driving device 12 that drives a bag support unit 11 to adjust the moving speed and the moving position of the bag support unit 11. Similarly, the drive control unit 52 may control elements other than the second driving source 24 (e.g., a power transmission adjustment device (not shown in the drawings)) included in the seal driving device 23 that drives the first sealing unit 21 and the second sealing unit 22 to adjust the relative opening-closing speed and the relative opening-closing position of the first sealing unit 21 and the second sealing unit 22.

The specific control method of components of the bag sealing apparatus 10 by the drive control unit 52 is not limited, but the drive control unit 52 performs control in such a manner that a bag support unit 11, the first sealing unit 21 and the second sealing unit 22 operate in conjunction with each other. For example, the drive control unit 52 may transmit regular synchronization signals to the support driving device 12 (in the present embodiment, the first driving source 13) and the seal driving device 23 (in the present embodiment, the second driving source 24), and the support driving device 12 and the seal driving device 23 may autonomously perform various operations at timings determined based on the received synchronization signals. Alternatively, the drive control unit 52 may send various operation signals to each of the support driving device 12 and the seal driving device 23 at desired timings, and the support driving device 12 and the seal driving device 23 may perform operations according to the received operation signals.

The heating control unit 53 controls a first heating drive device 43a to adjust the heat generation state of the first heating element 41a and controls a second heating drive device 43b to adjust the heat generation state of the second heating elements 41b.

For example, the first heating drive device 43a and the second heating drive device 43b may each have a supply power adjustment unit. In particular, in a case where the heat generation state of each of the plurality of second heating elements 41b is individually adjusted, the second heating drive device 43b may have a plurality of supply power adjustment units assigned to the respective second heating elements 41b (i.e., heater devices 40). On the other hand, in a case where the heat generation state of the plurality of second heating elements 41b is uniformly adjusted as a whole, the second heating drive device 43b may include a single supply power adjustment unit assigned commonly to the plurality of second heating elements 41b.

For example, the supply power adjustment unit is connected to a heating electric power source (not shown in the drawings) and the heater devices 40. The heating control unit 53 can control the supply power adjustment unit to adjust the amount of current/voltage from the heating electric power source which is to be supplied to the heater devices 40, thereby adjusting the heat generation of the first heating element 41a and the second heating elements 41b. Such a supply power adjustment unit may be a device (e.g., a relay device such as a solid-state relay) that can switch on and off the supply of current to the heater devices 40 or may be a device that can finely adjust the amount of current/voltage to be supplied to the heater devices 40 in stages or in a continuous manner.

The heating control unit 53 controls the first heating drive device 43a and the second heating drive device 43b based on the temperature of the sealing contact surface portion 21c, obtained by each temperature acquisition device 61, to adjust the heat generation of the first heating element 41a and the second heating elements 41b.

For example, the heating control unit 53 may control the first heating drive device 43a based on the acquisition results of two or more temperature acquisition devices 61 (e.g., all the temperature acquisition devices 61) to adjust the heat generation of the first heating element 41a.

If the second heating drive device 43b is capable of individually adjusting the heat generation of each second heating element 41b and if each second heating element 41b is capable of generating heat independently of the heat generation of the other second heating elements 41b, the heating control unit 53 may control the second heating drive device 43b in such a manner that the heat generation of each second heating element 41b is adjusted based on the acquisition result of a corresponding temperature acquisition device 61.

The heating control unit 53 may control the first heating drive device 43a, without being based on the acquisition results of the respective temperature acquisition devices 61, to adjust the heat generation of the first heating element 41a. The heating control unit 53 may use the acquisition results of each temperature acquisition device 61 only for adjusting the heat generation of each second heating element 41b.

The heating control unit 53 may further include, for example, a display unit 54, an alarm unit 55 and a memory unit 56. The display unit 54 may display, for example, the statuses of control by the drive control unit 52 and the heating control unit 53 to inform the operators the statuses. The alarm unit 55 may issue an alarm when an abnormality occurs, to inform the operators of the occurrence of the abnormality. The memory unit 56 may store any data and programs. For example, the drive control unit 52 and/or the heating control unit 53 may perform control based on the data and programs stored in the memory unit 56.

According to the bag sealing apparatus 10 of the above-described present embodiment, the sealing contact surface portion 21c is heated based on the combination of the heat generation of the first heating element 41a and the heat generation of the second heating elements 41b, and thus the heat condition of the sealing contact surface portion 21c can be controlled more strictly.

In particular, in cases where the heat generated by a plurality of second heating elements 41b positioned discretely in the sealing surface extension direction Ds can be individually adjusted, it is possible to not only adjust the overall temperature of the sealing contact surface portion 21c but also adjust a local temperature of the sealing contact surface portion 21c. As a result, even if a local temperature drop occurs in the sealing contact surface portion 21c, such a local temperature drop of the sealing contact surface portion 21c can be eliminated by adjusting the heat generation of a corresponding second heating element 41b, so that the entire sealing contact surface portion 21c can be accurately heated to a desired temperature.

For example, the temperature of the end portions of the sealing contact surface portion 21c may be more likely to drop than the temperature of the center portion. In this case, the second heating elements 41b corresponding to the end portions of the sealing contact surface portion 21c can be made to generate a larger amount of heat or generate heat more frequently than the second heating element 41b corresponding to the center portion of the sealing contact surface portion 21c, so that the local temperature drop at the end portions of the sealing contact surface portion 21c can be suppressed.

### [Application example]

The above-described bag sealing apparatuses 10 may be provided as a stand-alone device that performs the heat sealing process of bags B or may be provided as part of a bag processing apparatus (e.g., a package processing apparatus or a spout attachment apparatus) that sequentially performs multiple processes on a single bag B.

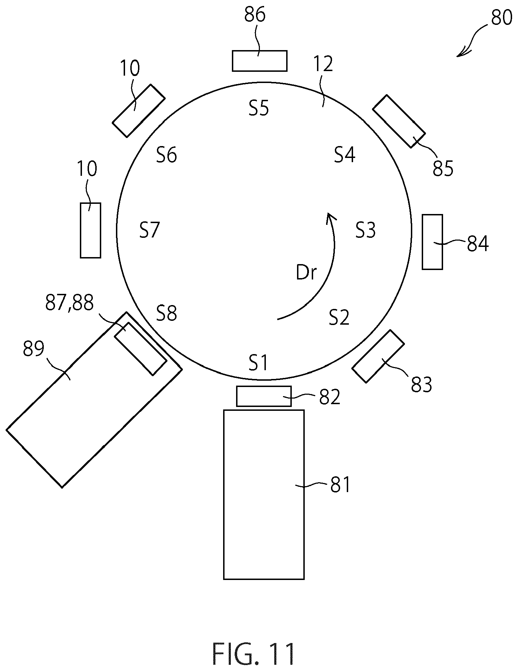

Fig. 11 is a top view schematically showing an example of a package processing apparatus 80. The package processing apparatus 80 shown in Fig. 11 includes a bag supply device 81, a bag delivery device 82 (a first station S1), a bag printing device 83 (a second station S2), a print inspection device 84 (a third station S3), a bag opening device 85 (a fourth station S4), a bag content feeding device 86 (a fifth station S5), bag sealing apparatuses 10 (a sixth station S6 and a seventh station S7), a seal section cooling device 87 (an eighth station S8), a bag release device 88 (the eighth station S8), and a bag discharge device 89.

New bags B are sequentially supplied to the package processing apparatus 80 by means of the bag supply device 81. The bag delivery device 82 delivers a bag B from the bag supply device 81 to a support driving device 12. The support driving device 12 includes, for example, a rotary table, and intermittently moves the same number of bag support units 11 (for example, grippers) as the number of stations in a conveyance direction (a circumferential direction) Dr. A bag B delivered via the bag delivery device 82 and supported by the support driving device 12 (specifically, each bag support unit 11) sequentially goes around the first station S1 to the eighth station S8.

The bag printing device 83 prints on a bag B and the print inspection device 84 inspects the printing state of a bag B. The bag opening device 85 opens the mouth portion of a bag B and the bag content feeding device 86 feeds contents into the inside of a bag B through the opened mouth portion. The bag sealing apparatus 10 seals (in particular, performs a heat seal on) the mouth portion of a bag B, and the seal section cooling device 87 cools the sealed area of a bag B. The bag release device 88 releases a bag B after cooling to the bag discharge device 89, and the bag discharge device 89 conveys a received bag B to a later stage. The seal section cooling device 87 and the bag release device 88 shown in Fig. 11 are realized by the same device. For example, cooling plates of a cooling release device that functions as the seal section cooling device 87 and the bag release device 88 may grasp the sealed area of a bag B in such a manner that the sealed area is cooled, and the cooling plates may release the grasp of the bag B and let the bag B fall to send the bag B to the bag discharge device 89.

Each bag B supported by the support driving device 12 (specifically, by each bag support unit 11) undergoes processing by a corresponding device while intermittently stopping at each station. As a result, the package processing apparatus 80 can continuously send out bags B (i.e., product bags) which information is printed on, which contain contents, and which have the sealed mouth portions, to a subsequent stage.

In the above-described bag sealing apparatuses 10 shown in Fig. 11, the first sealing unit 21 and the second sealing unit 22 bond a plurality of film members of a bag B (specifically, the mouth part of the front side wall portion and the mouth part of the rear side wall portion of a bag B) to each other by a heat sealing process.

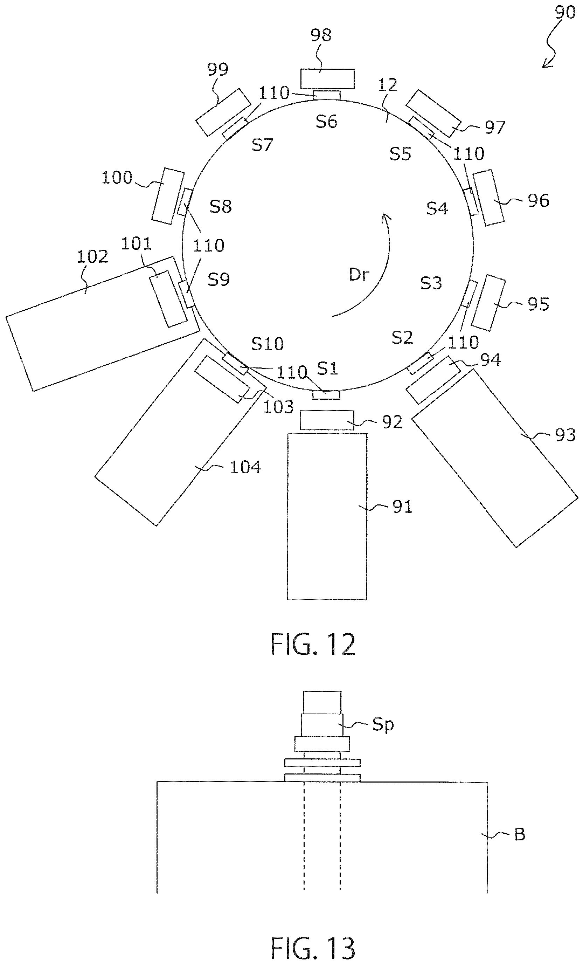

Fig. 12 is a top view schematically showing an example of a spout attachment apparatus 90. Fig. 13 is a side view showing an example of a bag B to which a spout Sp is attached.

The spout attachment apparatus 90 shown in Fig. 12 includes a spout supply device 91, a spout delivery device 92 (a first station S1), a bag supply device 93, a bag delivery device 94 (a second station S2), a temporary sealing device 95 (a third station S3), a first main sealing device 96 (a fourth station S4), a second main sealing device 97 (a fifth station S5), a seal cooling device 98 (a sixth station S6), a printing device 99 (a seventh station S7), an inspection device 100 (an eighth station S8), a product release device 101 (a ninth station S9), a product discharge device 102, a defective bag release device 103 (a tenth station S10), and a defective bag discharge device 104.

New spouts Sp (attachments) are sequentially supplied to the spout attachment apparatus 90 by means of the spout supply device 91. The spout delivery device 92 delivers a spout Sp from the spout supply device 91 to the support driving device 12. The support driving device 12 includes, for example, a rotary table, and intermittently moves, in a conveyance direction (a circumferential direction) Dr, the same number of bag support units (for example, grippers (not shown in Fig. 12)) as the number of stations, and the same number of spout holding units 110 as the number of stations. A spout Sp which is delivered via the spout delivery device 92 and supported by a spout holding unit 110, sequentially goes around the first station S1 to the ninth station S9 or the first station S1 to the tenth station S10.

New bags B are sequentially supplied to the spout attachment apparatus 90 by means of the bag supply device 93. The bag delivery device 94 delivers bags B from the bag supply device 93 to the support driving device 12. A bag B which is delivered via the bag delivery device 94 and supported by the support driving device 12 (each bag support unit), sequentially goes around the second station S2 to the ninth station S9 or the second station S2 to the tenth station S10.

The temporary sealing device 95 performs a temporary sealing process for a temporary fix of a bag B against a spout Sp. The first main sealing device 96 and the second main sealing device 97 perform a main sealing process for a main fix of a bag B to a spout Sp. The seal cooling device 98 cools the sealed area of a bag B. The printing device 99 prints on a bag B.

The inspection device 100 inspects the status of a bag B and a spout Sp. For example, the inspection device 100 acquires an image of a bag B and a spout Sp for inspection, and the inspection device 100 and/or the control panel 51 (e.g., an image analysis section not shown in the drawings) analyze the image to determine the suitability of the attachment state of a bag B to a spout Sp and the printing state.

The product release device 101 receives bags B with spouts Sp (product bags) showing good inspection results from the support driving device 12 and then releases the bags B with spouts Sp to the product discharge device 102, and the product discharge device 102 conveys the product bags to a later stage. The defective bag release device 103 receives bags B with spouts Sp (defective bags) showing unfavorable inspection results from the support driving device 12 and then releases the bags B with spouts Sp to the defective bag discharge device 104, and the defective bag discharge device 104 conveys the defective bags to a later stage.

Each bag B which is supported by the support driving device 12 is subjected to processing by a corresponding device while being intermittently stop at each station. As a result, the spout attachment apparatus 90 can sequentially send out bags to which spouts Sp are attached and on which information is printed (i.e., product bags) to a later stage.

The above-described bag sealing apparatus 10 can be applied to the temporary sealing device 95, the first main sealing device 96 and/or the second main sealing device 97 shown in Fig. 12. In this case, the first sealing unit 21 and the second sealing unit 22 bond film members included in a bag B (specifically, the mouth part of the front side wall portion and the mouth part of the rear side wall portion of a bag B) to a spout Sp (i.e., an attachment tool) by a heat sealing process.

The above-described bag sealing apparatus 10 is not only applicable to the package processing apparatus 80 shown in Fig. 11 and the spout attachment apparatus 90 shown in Fig. 12, but also to other apparatuses. For example, the bag sealing apparatus 10 may attach a bag B to an attachment tool other than a spout Sp by a heat sealing process.

As explained above, the heat sealing apparatus 10 may comprise: a first sealing unit 21 and a second sealing unit 22 which are provided to be capable of being opened and closed and perform a heat sealing process of a bag B while nipping the bag B in a state where the first sealing unit 21 and the second sealing unit 22 are arranged in a closed position with the bag B positioned between the first sealing unit 21 and the second sealing unit 22; and a heat shield member 15 including a heat reflector 16 which is provided to cover at least a part of the first sealing unit 21 and the second sealing unit 22 arranged in the closed position, at a position away from the first sealing unit 21 and the second sealing unit 22.

In this case, the heat reflector 16 can return the heat released from the first sealing unit 21 and/or the second sealing unit 22, to the first sealing unit 21 and/or the second sealing unit 22. Therefore, the first sealing unit 21 and/or the second sealing unit 22 can be efficiently heated to prevent the temperature of the first sealing unit 21 and/or the second sealing unit 22 from dropping, which is advantageous for the heat sealing process of a bag under desired temperature conditions.

The heat shield member 15 may include a heat insulating layer 17.

In this case, the first sealing unit 21 and/or the second sealing unit 22 can be efficiently heated to prevent the temperature of the first sealing unit 21 and/or the second sealing unit 22 from dropping.

The heat sealing apparatus 10 may comprise a first sealing unit 21 and a second sealing unit 22 which are provided to be capable of being opened and closed and perform a heat sealing process of a bag B while nipping the bag B in a state where the first sealing unit 21 and the second sealing unit 22 are arranged in a closed position with the bag B positioned between the first sealing unit 21 and the second sealing unit 22, wherein at least one of the first sealing unit 21 and the second sealing unit 22 includes a heating element 41 and a heat insulating layer 45a, 45b, 45c.

In this case, conduction of the heat emitted by a heating element 41 in the first sealing unit 21 and/or the second sealing unit 22 can be controlled by the heat insulating layers 45a, 45b, 45c. Therefore, it is possible to efficiently heat a bag B by the first sealing unit 21 and the second sealing unit 22, and it is advantageous to perform the heat sealing process of a bag under desired temperature conditions.

Each of the first sealing unit 21 and the second sealing unit 22 may have a sealing contact surface portion, and the first sealing unit 21 and the second sealing unit 22 may nip the bag B while the sealing contact surface portion is brought into contact with the bag B in a state where the first sealing unit 21 and the second sealing unit 22 are arranged in a closed position with a bag B positioned between the first sealing unit 21 and the second sealing unit 22, and the heat insulating layer 45a, 45b, 45c may not be positioned between the heating element 41 and the sealing contact surface portion.

In this case, heat can be effectively transferred from a heating element 41 toward a sealing contact surface portion.

The heat insulating layer 45a, 45b, 45c may be positioned away from the heating element 41.

The heat insulating layer 45d may be positioned adjacent to the heating element 41.

At least one of the first sealing unit 21 and the second sealing unit 22 may include a sealing body portion which has a first hole 47 and a second hole 48 connected to the first hole 47, the heating element 41 may be located in the first hole 47 and is supported by parts of a hole compartment surface Sd of the sealing body portion which face each other via the heating element 41, the hole compartment surface Sd compartmentalizing the first hole 47, and the second hole 48 may not be located between the heating element 41 and the sealing contact surface portion and forms the heat insulating layer 45d.

In this case, it is possible to simplify the configuration of the first sealing unit 21 and/or the second sealing unit 22 including a heating element 41 and a heat insulating layer.

Further, a heat sealing apparatus 10 may comprise a first sealing unit 21 and a second sealing unit 22 which are provided to be capable of being opened and closed, have sealing contact surface portions respectively, and nip a bag B to perform a heat sealing process while the sealing contact surface portions are brought into contact with the bag B in a state where the first sealing unit 21 and the second sealing unit 22 are arranged in a closed position with the bag B positioned between the first sealing unit 21 and the second sealing unit 22, wherein at least one of the first sealing unit 21 and the second sealing unit 22 includes: a temperature acquisition device that acquires temperature of the sealing contact surface portion; a first heating element 41a; and a second heating element 41b that generates heat according to the temperature of the sealing contact surface portion acquired by the temperature acquisition device.

In this case, the temperature of a sealing contact surface portion can be adjusted adaptively. Therefore, the first sealing unit 21 and/or the second sealing unit 22 can be efficiently heated to prevent the temperature of the first sealing unit 21 and/or the second sealing unit 22 from dropping, which is advantageous for the heat sealing process of a bag under desired temperature conditions.

The second heating element 41b may be positioned closer to the sealing contact surface portion than the first heating element 41a.

In this case, the temperature of a sealing contact surface portion can be effectively adjusted by the second heating element 41b.

The sealing contact surface portion of each of the first sealing unit 21 and the second sealing unit 22 may extend in a sealing surface extension direction Ds, a plurality of second heating elements 41b may be provided, and the plurality of second heating elements 41b may be discretely positioned in the sealing surface extension direction Ds.

In this case, the temperature of a wide range of a sealing contact surface portion can be adjusted by a plurality of second heating elements 41b.

The first sealing unit 21 and the second sealing unit 22 may bond a plurality of film members included in the bag B to each other by the heat sealing process.

The first sealing unit 21 and the second sealing unit 22 may bond a plurality of film members included in the bag B to an attachment tool by the heat sealing process.

The present disclosure is not limited to the embodiments and modification examples described above. For example, various variations may be added to each element of the above-described embodiments and modification examples, and configurations may be combined partially or entirely among the above-described embodiments and modification examples. Further, the effects produced by this disclosure are also not limited to the effects described above, and effects specific to the particular configuration of each embodiment can also be exerted. As described above, various additions, changes, and partial deletions can be made to each element described in the claims, specification, abstract, and drawings without departing from the technical idea and the purpose of the present disclosure.

## Claims

1. A heat sealing apparatus comprising:
a first sealing unit and a second sealing unit which are provided to be capable of being opened and closed and perform a heat sealing process of a bag while nipping the bag in a state where the first sealing unit and the second sealing unit are arranged in a closed position with the bag positioned between the first sealing unit and the second sealing unit; and
a heat shield member including a heat reflector which is provided to cover at least a part of the first sealing unit and the second sealing unit arranged in the closed position, at a position away from the first sealing unit and the second sealing unit.

2. The heat sealing apparatus as defined in claim 1, wherein the heat shield member includes a heat insulating layer.

3. A heat sealing apparatus comprising a first sealing unit and a second sealing unit which are provided to be capable of being opened and closed and perform a heat sealing process of a bag while nipping the bag in a state where the first sealing unit and the second sealing unit are arranged in a closed position with the bag positioned between the first sealing unit and the second sealing unit,
wherein at least one of the first sealing unit and the second sealing unit includes a heating element and a heat insulating layer.

4. The heat sealing apparatus as defined in claim 3, wherein:
each of the first sealing unit and the second sealing unit has a sealing contact surface portion, and the first sealing unit and the second sealing unit nip the bag while the sealing contact surface portion is brought into contact with the bag in a state where the first sealing unit and the second sealing unit are arranged in the closed position with a bag positioned between the first sealing unit and the second sealing unit, and
the heat insulating layer is not positioned between the heating element and the sealing contact surface portion.

5. The heat sealing apparatus as defined in claim 3 or 4, wherein the heat insulating layer is positioned away from the heating element.

6. The heat sealing apparatus as defined in claim 3 or 4, wherein the heat insulating layer is positioned adjacent to the heating element.

7. The heat sealing apparatus as defined in claim 4, wherein:
at least one of the first sealing unit and the second sealing unit include a sealing body portion which has a first hole and a second hole connected to the first hole,
the heating element is located in the first hole and is supported by parts of a hole compartment surface of the sealing body portion which face each other via the heating element, the hole compartment surface compartmentalizing the first hole, and
the second hole is not located between the heating element and the sealing contact surface portion and forms the heat insulating layer.

8. A heat sealing apparatus comprising a first sealing unit and a second sealing unit which are provided to be capable of being opened and closed, have sealing contact surface portions respectively, and nip a bag to perform a heat sealing process while the sealing contact surface portions are brought into contact with the bag in a state where the first sealing unit and the second sealing unit are arranged in a closed position with the bag positioned between the first sealing unit and the second sealing unit,
wherein at least one of the first sealing unit and the second sealing unit includes:
a temperature acquisition device that acquires temperature of the sealing contact surface portion;
a first heating element; and
a second heating element that generates heat according to the temperature of the sealing contact surface portion acquired by the temperature acquisition device.

9. The heat sealing apparatus as defined in claim 8, wherein the second heating element is positioned closer to the sealing contact surface portion than the first heating element.

10. The heat sealing apparatus as defined in claim 8 or 9, wherein:
the sealing contact surface portion of each of the first sealing unit and the second sealing unit extends in a sealing surface extension direction,
a plurality of second heating elements are provided, and
the plurality of second heating elements are discretely positioned in the sealing surface extension direction.

11. The heat sealing apparatus as defined in any one of claims 1 to 10, wherein the first sealing unit and the second sealing unit bond a plurality of film members included in the bag to each other by the heat sealing process.

12. The heat sealing apparatus as defined in any one of claims 1 to 10, wherein the first sealing unit and the second sealing unit bond a plurality of film members included in the bag to an attachment tool by the heat sealing process.
